# EUROPÄISCHE PATENTSCHRIFT

(11) **EP 2 705 556 B1**
(45) Veröffentlichungstag und Bekanntmachung des Hinweises auf die Patenterteilung: **03.06.2015**
(21) Anmeldenummer: 12717319.3
(22) Anmeldetag: 27.04.2012
(51) Int. Cl.: B23K 26/03, B23K 26/08, H01G 9/008, H01G 11/76, H01M 10/04, H01G 13/02, B23K 26/38, H01M 10/0587

(54) **VERFAHREN UND VORRICHTUNG ZUR HERSTELLUNG VON ELEKTRODENWICKELN**
METHOD AND DEVICE FOR PRODUCING ELECTRODE COILS
PROCÉDÉ ET DISPOSITIF DE FABRICATION D'ENROULEMENTS D'ÉLECTRODE

(30) Priorität: 02.05.2011 DE 102011075063
(43) Veröffentlichungstag der Anmeldung: 12.03.2014
(73) Patentinhaber: VOLKSWAGEN VARTA Microbattery Forschungsgesellschaft mbH & Co. KG, 73479 Ellwangen Jagst (DE)
(72) Erfinder: HOLL, Konrad, 73434 Aalen (DE); POMPETZKI, Markus, 73434 Aalen (DE); SEKLER, Robert, 73479 Ellwangen Rattstadt (DE); STELZIG, Heiner, 73494 Rosenberg (DE); STOCK, Stefan, 73492 Rainau (DE)
(74) Vertreter: Patentanwälte Ruff, Wilhelm, Beier, Dauster & Partner
(86) Internationale Anmeldenummer: PCT/EP2012/057824
(87) Internationale Veröffentlichungsnummer: WO 2012/150194

(56) Entgegenhaltungen:
- EP-A1- 2 254 176
- EP-A2- 0 277 761
- EP-A2- 1 691 432
- US-A1- 2009 239 133
- US-A1- 2010 281 685

## Beschreibung

Die vorliegende Erfindung betrifft ein Verfahren zur Herstellung von Elektrodenwickeln und eine zur Durchführung des Verfahrens geeignete Vorrichtung.

Der Begriff "Batterie" meinte ursprünglich mehrere in Serie geschaltete galvanische Zellen in einem Gehäuse. Heute werden jedoch auch einzelne galvanische Zellen häufig als Batterie bezeichnet. Bei der Entladung einer galvanischen Zelle findet eine energieliefernde chemische Reaktion statt, welche sich aus zwei elektrisch miteinander gekoppelten aber räumlich voneinander getrennten Teilreaktionen zusammensetzt. An der negativen Elektrode werden in einem Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zu einem der Elektrodenreaktion entsprechenden Ionenstrom innerhalb der Zelle. Dieser Ionenstrom wird durch einen ionisch leitenden Elektrolyten gewährleistet. In sekundären Zellen und Batterien ist diese Entladereaktion reversibel. Es besteht also die Möglichkeit, die bei der Entladung erfolgte Umwandlung chemischer Energie in elektrische Energie umzukehren. Werden in diesem Zusammenhang die Begriffe "Anode" und "Kathode" benutzt, benennt man die Elektroden in der Regel entsprechend ihrer Entladefunktion. Die negative Elektrode ist in solchen Zellen also die Anode, die positive Elektrode die Kathode.

Wie sekundäre Zellen und Batterien können auch Kondensatoren reversibel elektrische Energie speichern, allerdings nicht in chemischer Form sondern in einem elektrischen Feld zwischen zwei elektrisch leitenden Flächen, den Kondensator-Elektroden, die meist in geringem Abstand zueinander angeordnet sind. Da elektrische Ladung in einem Kondensator nicht erst in Folge einer chemischen Reaktion freigesetzt oder gespeichert wird, kann sie sehr schnell aufgenommen und wieder abgegeben werden. Dafür liegt die Energiedichte eines Kondensators in der Regel sehr deutlich unter der einer Batterie.

Unter den bekannten sekundären Zellen und Batterien werden vergleichsweise hohe Energiedichten insbesondere von Lithium-Ionen-Batterien erreicht. Lithium-Ionen-Batterien enthalten in vielen Fällen einen Zellenstapel (stack), der aus mehreren Einzelzellen besteht. Insbesondere Zellen und Batterien mit hoher Kapazität werden jedoch häufig als Wickelzellen konstruiert, die streifen- oder bandförmige Elektroden in gewickelter Form (Elektrodenwickel) aufweisen. Dies ist auch die bevorzugte Bauform von Kondensatoren.

Üblicherweise weisen sekundäre Zellen und Batterien sowie Kondensatoren mit Wickelstruktur einen gewickelten Verbund aus flächigen Elektroden und Separatoren mit der Sequenz positive Elektrode / Separator / negative Elektrode auf. Im Fall von sekundären Zellen und Batterien umfassen die Elektroden dabei üblicherweise metallische Stromableiter sowie elektrochemisch aktive Komponenten und elektrochemisch inaktive Komponenten. Als elektrochemisch aktive Komponenten (oft auch als Aktivmaterialien bezeichnet) kommen für sekundäre Lithium-Ionen-Batterien sämtliche Materialien in Frage, die Lithium-Ionen aufnehmen und wieder abgeben können. Stand der Technik sind diesbezüglich für die negative Elektrode insbesondere Partikel auf Kohlenstoffbasis wie graphitischer Kohlenstoff oder zur Interkalation von Lithium befähigte nicht-graphitische Kohlenstoffmaterialien. Weiterhin können auch metallische und halbmetallische Materialien zum Einsatz kommen, die mit Lithium legierbar sind oder Komposite aus solchen Materialien mit beispielsweise kohlenstoffbasierten Materialien. Für die positive Elektrode kommen insbesondere Lithium-Metalloxid-Verbindungen und Lithium-Metallphosphat-Verbindungen wie LiCoO₂ und LiFePO₄ in Frage. Als elektrochemisch inaktive Komponenten sind an erster Stelle Elektrodenbinder und die erwähnten Stromableiter zu nennen. Über die Stromableiter werden Elektronen aus den Elektroden zu- oder abgeführt. Die Elektrodenbinder gewährleisten die mechanische Stabilität der Elektroden und sorgen für die Kontaktierung der Partikel aus elektrochemisch aktivem Material untereinander sowie zum Stromableiter. Als Separatoren kommen insbesondere mikroporöse Kunststofffolien in Frage.

Im Fall von Kondensatoren handelt es sich bei den Elektroden meist um elektrisch leitende Substrate wie Metalle. Als Separator kann beispielsweise ein nicht elektrisch leitendes Vlies, eine poröse Kunststofffolie (z.B. Polyethylen) oder eine nicht elektrisch leitende poröse keramische Schicht (z.B Alumniumoxid) dienen.

Zur Herstellung von Elektroden für sekundäre Batterien und Zellen werden üblicherweise Pasten, umfassend die erwähnten elektrochemisch aktiven und inaktiven Komponenten, in Form dünner Schichten auf elektrischer Ableiter aufgebracht, getrocknet und in die gewünschte Passform gebracht. Üblicherweise werden die Schichten anschließend gewalzt und gepresst sowie gegebenenfalls anschließend mit Separatoren und Gegenelektroden kombiniert, was beispielsweise in der in der DE 10 2007 019 663 A1, der DE 101 18 639 A1, der DE 100 20 031 A1, der EP 1 691 432 A2 und der US 2010/0281685 A1 beschrieben ist. Insbesondere bei der Herstellung von Wickelzellen kann es dabei allerdings zu Problemen kommen.

Die Ableitung von Strom aus Elektrodenwickeln erfolgt über Ableiterfahnen. Es ist allgemein üblich, bei der Herstellung von Elektrodenwickeln die zu wickelnden streifen- oder bandförmigen Elektroden mit mehreren, vorzugsweise einer Vielzahl von Ableiterfahnen zu versehen, um beim Laden oder Entladen die Elektroden möglichst gleichmäßig zu belasten. Es ist entsprechend üblich, über die gesamte Länge eines zu wickelnden Elektrodenstreifens verteilt Ableiterfahnen vorzusehen. Beispiele hierfür finden sich z.B. in der EP 2 254 176 A1. Im fertigen Wickel ragen diese Ableiterfahnen üblicherweise stirnseitig aus dem Wickel heraus. Dabei sollten Ableiterfahnen gleicher Polarität gruppiert, insbesondere überlappend in einer stapelförmigen Anordnung vorliegen, damit sie möglichst leicht miteinander verbunden werden können, beispielsweise durch Verschweißung. Damit eine solche Gruppierung erhalten wird und die Ableiterfahnen, z.B. bei spiralförmigen Wickeln, nicht etwa in einer mehr oder weniger zufälligen radialen Verteilung vorliegen, muss berücksichtigt werden, dass der Radius eines Elektrodenwickels mit jeder Windung des Wickels nach außen hin zunimmt. Werden Ableiterfahnen in gleichmäßigen Abständen an der oder den Längsseiten eines Elektrodenstreifens angeordnet, so führt dies zu einem radialen Versatz der Ableiterfahnen im Wickel.

In der Praxis begegnet man diesem Problem, indem man die Abstände zwischen benachbarten Ableiterfahnen entlang dem zu wickelnden Elektrodenstreifen in Richtung des im Wickel außenliegenden Endes des Streifens ansteigen lässt. Die benötigten Abstände lassen sich unter Berücksichtigung der Dicke der Elektroden recht einfach berechnen.

So ist aus der US 2009/0239133 A1 ein Verfahren zur Herstellung eines Elektrodenwickels bekannt, bei dem die positiven und negativen Elektroden als bandförmige Wickel bereitgestellt werden. Mittels zweier Schneideeinheiten werden Ableiterfahnen in vorbestimmten, sich periodisch vergrößernden Abständen in die Längsränder der Elektroden geschnitten. Dies geschieht, während die Elektroden zu einem Elektrodenwickel verarbeitet werden.

Allerdings kommt es insbesondere bei den Elektroden von sekundären Batterien und Zellen innerhalb gewisser Toleranzen zu Schwankungen der Dicke in Längsrichtung. Bei einer minimalen Dickenschwankung von +/- 1 µm kann in einer Wickelzelle mit mehr als 100 Windungen der resultierende Versatz bereits bei mehreren Millimetern liegen.

Der vorliegenden Erfindung lag die Aufgabe zugrunde, eine Lösung für dieses Problem zu finden.

Diese Aufgabe wird gelöst durch das Verfahren mit den Merkmalen des Anspruchs 1 sowie durch die Vorrichtung mit den Merkmalen des Anspruchs 4. Bevorzugte Ausführungsformen des erfindungsgemäßen Verfahrens sind in den abhängigen Ansprüchen 2 bis 3 angegeben. Der Wortlaut sämtlicher Ansprüche wird hiermit durch Bezugnahme zum Inhalt dieser Beschreibung gemacht.

Bei dem erfindungsgemäßen Verfahren handelt es sich um ein Verfahren zur Herstellung von Elektrodenwickeln, das zumindest die folgenden Schritte aufweist:
- In einem Schritt A wird mindestens eine streifen- oder bandförmige Anode bereitgestellt.
- In einem Schritt B werden flächige negative Ableiterfahnen in variierenden Abständen an mindestens einer Längsseite der mindestens einen Anode ausgebildet. Alternativ oder zusätzlich kann in diesem Schritt auch eine Kontur in mindestens eine Längsseite der mindestens einen Anode geschnitten werden.
- In einem Schritt C wird mindestens eine streifen- oder bandförmige Kathode bereitgestellt.
- In einem Schritt D werden flächige positive Ableiterfahnen in variierenden Abständen an mindestens einer Längsseite der mindestens einen Kathode ausgebildet. Alternativ oder zusätzlich kann in diesem Schritt auch eine Kontur in mindestens eine Längsseite der mindestens einen Anode geschnitten werden.
- In einem Schritt E wird mindestens ein streifen- oder bandförmiger Separator bereitgestellt.
- Gegebenenfalls wird in einem Schritt F eine Kontur in mindestens eine Längsseite des mindestens einen Separators geschnitten.
- In einem Schritt G werden die mindestens eine Anode, die mindestens eine Kathode und der mindestens eine Separator zu einem Wickel mit der Sequenz Anode / Separator / Kathode aufgewickelt, insbesondere spiralig aufgewickelt.

Die Schritte A bis E und G sind zwingend Bestandteil des erfindungsgemäßen Verfahrens, der Schritt F ist ein fakultativer Schritt, der vor allem bei der Herstellung asymmetrischer Elektrodenwickel eine Rolle spielt. Hierzu aber später noch mehr.

Üblicherweise sind entweder die Anode oder die Kathode oder sogar beide Elektroden beidseitig von einem Separator bedeckt, um Kurzschlüsse beim Aufwickeln zu vermeiden. Es werden also im Schritt E bevorzugt zwei oder mehr Separatoren bereitgestellt und im Schritt G dann aufgewickelt. Auch die Herstellung von Sequenzen der Art Anode / Separator / Kathode / Separator / Anode oder Kathode / Separator / Anode / Separator / Kathode ist ohne weiteres möglich.

In bevorzugten Ausführungsformen können Ableiterfahnen an beiden Längsseiten der streifen- oder bandförmigen Anode und/oder der streifen- oder bandförmigen Kathode ausgebildet werden. In diesen Fällen ragen Ableiterfahnen gleicher Polarität an gegenüberliegenden Seiten aus dem resultierenden Elektrodenwickel.

Bei einem Streifen oder einem Band handelt es sich bekanntlich um einen flachen Gegenstand, dessen Länge seine Breite um ein Mehrfaches übersteigt und der dabei bevorzugt im Wesentlichen über seine gesamte Länge eine im Wesentlichen gleichmäßige Breite aufweist. Entsprechend sind die Begriffe "streifen- oder bandförmig" auch vorliegend zu verstehen. So liegt die Länge von im Rahmen der vorliegenden Erfindung einsetzbaren Anoden, Kathoden und Separatoren in der Regel zwischen 0,25 m und 25 m, bevorzugt zwischen 0,5 m und 15 m. Ihre maximale Breite liegt bevorzugt zwischen 20 mm und 400 mm, bevorzugt zwischen 40 mm und 200 mm.

Da die Ableiterfahnen an den Längsseiten der Elektroden ausgebildet und diese in Längsrichtung flach aufgewickelt werden, ragen sie üblicherweise in axialer Richtung (bezogen auf die Wickelachse), also insbesondere stirnseitig, aus dem Wickel heraus. Die Ableiterfahnen selbst liegen nicht in gewickelter Form vor. Streng genommen sind sie deshalb auch nicht Teil des Wickels, sondern dienen nur zu dessen elektrischer Kontaktierung. Es lässt sich also unterscheiden zwischen einem Wickelgrundkörper, der aus den gewickelten Elektroden und Separatoren besteht, und den aus dem Grundkörper herausragenden ungewickelten Ableiterfahnen.

In Übereinstimmung zur eingangs geschilderten Problemstellung ist es bevorzugt, dass im Schritt F Wickel erhalten werden, bei denen die aus dem Wickel herausragenden Ableiterfahnen in einer Art stapelförmigen Anordnung überlappend angeordnet sind. Wie oben erwähnt, sind die Ableiterfahnen flächig, z.B. rechteckig oder quadratisch, ausgebildet, in der Regel weisen sie zwei gegenüberliegende Flachseiten auf, die im fertigen Wickel eben oder, insbesondere bei spiralförmigen Wickeln, auch gebogen (die eine Flachseite konvex, die andere konkav) vorliegen können. Unter einer überlappenden Anordnung soll dabei insbesondere verstanden werden, dass die Flachseiten sämtlicher Ableiterfahnen innerhalb der stapelförmigen Anordnung in einer Richtung, bevorzugt senkrecht zu den Flachseiten, überlappen, vorzugsweise zu mindestens 75 %, besonders bevorzugt zu mindestens 90 %, insbesondere zu mindestens 95 %. In der Folge weisen die Ableiterfahnen innerhalb der stapelförmigen Anordnung zueinander nur einen minimalen Versatz auf.

Bevorzugt sind alle Ableiterfahnen innerhalb einer stapelförmigen Anordnung gleich groß dimensioniert, was aber nicht zwingend erforderlich ist.

Besonders zeichnet sich das erfindungsgemäße Verfahren dadurch aus, dass der Schritt G mindestens mit einem der Schritte B oder D, insbesondere mit beiden Schritten, sowie gegebenenfalls auch mit dem Schritt F, zeitlich überlappt. Das bedeutet, dass gemäß dem vorliegenden Verfahren nicht etwa zuerst ein Elektrodenstreifen oder Elektrodenband fertiggestellt und dann in einem nachgeschalteten, separaten Schritt aufgewickelt wird. Vielmehr wird gemäß dem erfindungsgemäßen Verfahren damit begonnen, die Elektrodenstreifen und den mindestens einen Separator zu einem Wickel zu verarbeiten, bevor sämtliche Ableiterfahnen entlang der mindestens einen Längsseite der mindestens einen Anode und/oder Kathode ausgebildet sind und/oder bevor der Konturschnitt auf den Längsseiten der Elektroden und des mindestens einen Separators abgeschlossen ist.

Gemäß dem erfindungsgemäßen Verfahren wird über einen oder mehrere Sensoren mindestens einer der Parameter
- relative Positionierung der positiven Ableiterfahnen zueinander (im entstehenden Elektrodenwickel),
- relative Positionierung der negativen Ableiterfahnen zueinander (im entstehenden Elektrodenwickel),
- relative Positionierung der positiven Ableiterfahnen zu den negativen Ableiterfahnen (im entstehenden Elektrodenwickel),relative Positionierung der mindestens einen Kathode zur mindestens einen Anode (im entstehenden Elektrodenwickel),
- relative Positionierung des mindestens einen Separators zur mindestens einen Kathode und/oder zur mindestens einen Anode (im entstehenden Elektrodenwickel),
- Dicke und/oder Geometrie der mindestens einen Anode, insbesondere Dicken- und/oder geometrischer Verlauf der mindestens einen streifen- oder bandförmigen Anode in Längsrichtung,
- Dicke und/oder Geometrie der mindestens einen Kathode, insbesondere Dicken- und/oder geometrischer Verlauf der mindestens einen streifen- oder bandförmigen Kathode in Längsrichtung, und
- Dicke und/oder Geometrie des mindestens einen Separators, insbesondere Dicken- und/oder geometrischer Verlauf der mindestens einen streifen- oder bandförmigen Separators in Längsrichtung,
   erfasst. Anschließend werden in Abhängigkeit des Messergebnisses
   - die Abstände zwischen den in Schritt B und/oder Schritt D noch auszubildenden Ableiterfahnen nachkorrigiert
      und/oder
   - die zu schneidenden Konturen für die Längsseiten der Elektroden und/oder des mindestens einen Separators nachkorrigiert.

Ziel der Messungen ist es, mögliche Abweichungen von der errechneten Position der Ableiterfahnen, der Elektroden und/oder der Separatoren im Wickel, insbesondere in Folge von Schwankungen der Dicke der Elektroden und/oder Separatoren, frühzeitig zu erkennen und der daraus resultierenden versetzten Anordnung der Ableiterfahnen, Elektroden und/oder Separatoren im entstehenden Wickel entgegenzuwirken, indem die Position der noch zu bildenden Ableiterfahnen und / oder die zu schneidenden Konturen an dem noch nicht gewickelten Teil des Anoden-, Kathoden- oder Separatorstreifens entsprechend korrigiert wird. Beim erfindungsgemäßen Verfahren handelt es sich entsprechend bevorzugt um ein geregeltes Verfahren und nicht um ein nur gesteuertes.

Das Ausbilden der Ableiterfahnen erfolgt bevorzugt über einen Schneidevorgang, insbesondere mit Hilfe mindestens eines Lasers. Sowohl die Konturen von Elektroden und Separatoren als auch die Ableiterfahnen werden also bevorzugt ausgeschnitten. Besonders bevorzugt werden während des Konturschnitts der Elektroden gleichzeitig auch die Ableiterfahnen ausgeschnitten.

Wie eingangs erwähnt, werden zur Herstellung von Elektroden von Batterien und Batteriezellen in einem Beschichtungsprozess üblicherweise Pasten umfassend elektrochemisch aktive und inaktive Komponenten auf elektrische Ableiter aufgebracht, getrocknet und in die gewünschte Passform gebracht. Letzterer Schritt umfasst gegebenenfalls auch das Ausschneiden der Ableiterfahnen. Die Ableiter werden üblicherweise in Form von Endlosbändern bereitgestellt, die bei mittiger Beschichtung unbeschichtete Randbereiche an den Längsseiten aufweisen, aus denen die Ableiterfahnen ausgeschnitten werden können. In bevorzugten Ausführungsformen werden dabei gleichzeitig die Randkonturen von Anode und Kathode festgelegt.

In der Regel kommen als Ableiter für Batterieelektroden bandförmige Folien, Gitter und Netze aus Metall zum Einsatz. Bei Lithium-Ionen-Batterien sind insbesondere Ableiter aus Kupfer (auf der Anodenseite) und Aluminium (auf der Kathodenseite) bevorzugt.

Sowohl die beschichteten als auch die unbeschichteten Bereiche der Ableiter können ohne weiteres mit einem Laser geschnitten werden. Die Verwendung von Lasern zum Schneiden von Elektroden ist beispielsweise bereits aus der EP 465 628 B1 bekannt. Bevorzugt kommen bei einem erfindungsgemäßen Verfahren mehr als ein Laser, bevorzugt zwei bis 8 Laser, zum Einsatz, mit denen gleichzeitig die Ableiterfahnen und die Konturen von Anode und Kathode geschnitten werden können.

Entsprechend den vorstehend beschriebenen bevorzugten Ausführungsformen werden die Ableiterfahnen von Elektroden für Batterien insbesondere durch einen Schneidevorgang aus einem Ableiter gebildet, der zumindest teilweise mit einer Paste umfassend elektrochemisch aktive und inaktive Komponenten bedeckt ist. Ableiter und Ableiterfahnen der Elektroden können also einstückig ausgebildet sein.

Durch entsprechenden Beschnitt der Längsränder der Elektroden lassen sich im Grunde Wickel in beliebigen Geometrien erhalten. Der Klassische spiralförmige Wickel weist einen zylinderförmigen Grundkörper und damit eine sehr hohe Symmetrie auf. Abhängig vom Anwendungsfall kann es aber gewünscht sein, flache, nichtrotationssymmetrische Wickel mit ovalem Windungsverlauf oder sogar Wickel, die einen Wickelgrundkörper mit einem sich in axialer Richtung ändernden Querschnitt aufweisen (asymmetrische Wickel) herzustellen. Insbesondere bei letzteren ist nicht nur die Positionierung der Ableiterfahnen wichtig, auch die Elektroden und Separatoren dürfen im Wickel keinen Versatz zueinander aufweisen. Entsprechend ist es wichtig, mittels der erwähnten Sensoren die relative Positionierung der mindestens einen Kathode zur mindestens einen Anode zueinander sowie der Elektroden zu dem mindestens einen Separators im entstehenden Elektrodenwickel zu überwachen und bei Bedarf die noch zu schneidenden Konturen anzupassen.

Bei der streifen- oder bandförmigen Anode und der streifen- oder bandförmigen Kathode kann es sich sowohl um die Elektroden einer Batteriezelle als auch um die Elektroden eines Kondensators handeln. Entsprechend kann das erfindungsgemäße Verfahren sowohl zur Herstellung von Batteriezellen als auch zur Herstellung von Kondensatoren dienen. Betreffend die Materialauswahl für die Elektroden sowie auch für geeignete Separatoren wird in beiden Fällen auf die Ausführungen im einleitenden Teil der vorliegenden Beschreibung verwiesen.

Auch eine Vorrichtung zur Herstellung von Elektrodenwickeln, insbesondere nach einem erfindungsgemäßen Verfahren, ist Gegenstand der vorliegenden Erfindung. Eine solche Vorrichtung umfasst
- Mittel zum Bereitstellen von mindestens einer streifen- oder bandförmigen Anode,
- Mittel zum Bereitstellen von mindestens einer streifen- oder bandförmigen Kathode,
- Mittel zur Bereitstellung mindestens eines streifen- oder bandförmigen Separators und
- Mittel zum Aufwickeln der mindestens einen Anode, der mindestens einen Kathode und des mindestens einen Separators zu einem Wickel mit der Sequenz Anode / Separator / Kathode,
   wobei es sich bei den Mitteln in der Regel um eine übliche Wickelvorrichtung zum Herstellen von Elektrodenwickeln sowie um geeignete Transportvorrichtungen zum Speisen der Wickelvorrichtung mit bandförmigen Elektroden und Separatoren handelt. Weiterhin umfasst die erfindungsgemäße Vorrichtung
- Mittel zum Ausbilden von flächigen negativen Ableiterfahnen in variierenden Abständen an mindestens einer Längsseite der mindestens einen Anode und/oder Mittel zum Schneiden einer Kontur in mindestens eine Längsseite der mindestens einen Anode,
- Mittel zum Ausbilden von flächigen positiven Ableiterfahnen in variierenden Abständen an mindestens einer Längsseite der mindestens einen Kathode und/oder Mittel zum Schneiden einer Kontur in mindestens eine Längsseite der mindestens einen Kathode, sowie
- gegebenenfalls Mittel zum Schneiden einer Kontur in mindestens eine Längsseite des mindestens einen Separators.

In Übereinstimmung mit obigen Ausführungen zum erfindungsgemäßen Verfahren handelt es sich dabei bevorzugt um Schneidemittel, insbesondere um mindestens einen Laser.

Besonders zeichnet sich eine erfindungsgemäße Vorrichtung dadurch aus, dass sie mindestens einen Sensor zur Bestimmung mindestens eines der im Zusammenhang mit der Erkennung möglicher Abweichungen von der errechneten Position der Ableiterfahnen, der Elektroden und/oder der Separatoren im Wickel, insbesondere in Folge von Schwankungen der Dicke der Elektroden, relevanten Parameter (s.o.) aufweist sowie eine Datenverarbeitungs- und Steuereinrichtung, welche die Messergebnisse des mindestens einen Sensors erfasst und in Abhängigkeit derselben den Mitteln zum Ausbilden der flächigen Ableiterfahnen Korrekturen betreffend die Abstände oder die Variation der Abstände zwischen den noch auszubildenden Ableiterfahnen vorgibt und/oder den Mitteln zum Schneiden der Kontur in die mindestens eine Längsseite der mindestens einen Kathode, der mindestens einen Anode und/oder des mindestens einen Separators eine korrigierte Konturvorgabe liefert.

Mit dem erfindungsgemäßen Verfahren und der erfindungsgemäßen Vorrichtung lassen sich Wickelelektroden für galvanische Zellen oder Kondensatoren in praktisch beliebigen Formaten herstellen. Als Schneidemittel dienen besonders bevorzugt vier bis acht Laser, mit denen die mindestens eine Anode, die mindestens eine Kathode und der mindestens eine Separator simultan geschnitten werden können. Mittels mindestens eines mechanischen oder elektronischen Messsensors an der Wickelvorrichtung können die relativen Positionen von Elektroden und Separatoren im entstehenden Wickel ständig überprüft und automatisch über ein komplexes Rechnerprogramm nachkorrigiert werden. Dadurch können beispielsweise die oben beschriebenen Einflüsse von Dickenschwankungen der Elektroden auf die Positionierung der Ableiterfahnen nahezu vollständig eliminiert werden.

In der Praxis wird meist ein sich in der Länge progressiv änderndes Schnittmuster für jede Elektrode und jeden Separator mit einer unter Berücksichtigung des Wickelumfangs und der mittleren Materialdicken berechneten Lage der Ableiterfahnen vorgegeben. Die einzelnen Lagen (Elektroden- und Separatoren) werden im Rechner virtuell zueinander positioniert, dann gemäß dem vorgegebenen Schnittmuster geschnitten und aufgewickelt. Dabei wird die Positionierung der Lagen zueinander mittels Sensoren kontinuierlich erfasst und bei Bedarf automatisch über eine über dem Schnittmuster liegende Rechnerebene simultan für alle Lagen nachkorrigiert.

Besonders bevorzugt werden die Laser parallel betrieben und über ein komplexes Maschinenprogramm so angesteuert, dass Wickel und Ableiterfahnen in nahezu beliebigen Geometrien erstellt werden können. Eine Änderung der Schneidkontur kann z.B. über das Einspielen einer graphischen Datei z.B. im DXF-Format oder durch das Zeichnen des Schnittmusters direkt auf der Bedienoberfläche eines Systemrechners erfolgen.

Näher erläutert werden die erfindungsgemäße Vorrichtung und das erfindungsgemäße Verfahren anhand der Zeichnungen. Es sei an dieser Stelle explizit betont, dass sämtliche in der vorliegenden Anmeldung beschriebenen fakultativen Aspekte der erfindungsgemäßen Vorrichtung oder des erfindungsgemäßen Verfahrens jeweils für sich allein oder in Kombination mit einem oder mehreren der weiteren beschriebenen fakultativen Aspekte bei einer Ausführungsform der Erfindung verwirklicht sein können. Die nachfolgende Beschreibung von bevorzugten Ausführungsformen dient lediglich zur Erläuterung und zum besseren Verständnis der Erfindung und ist in keiner Weise einschränkend zu verstehen.

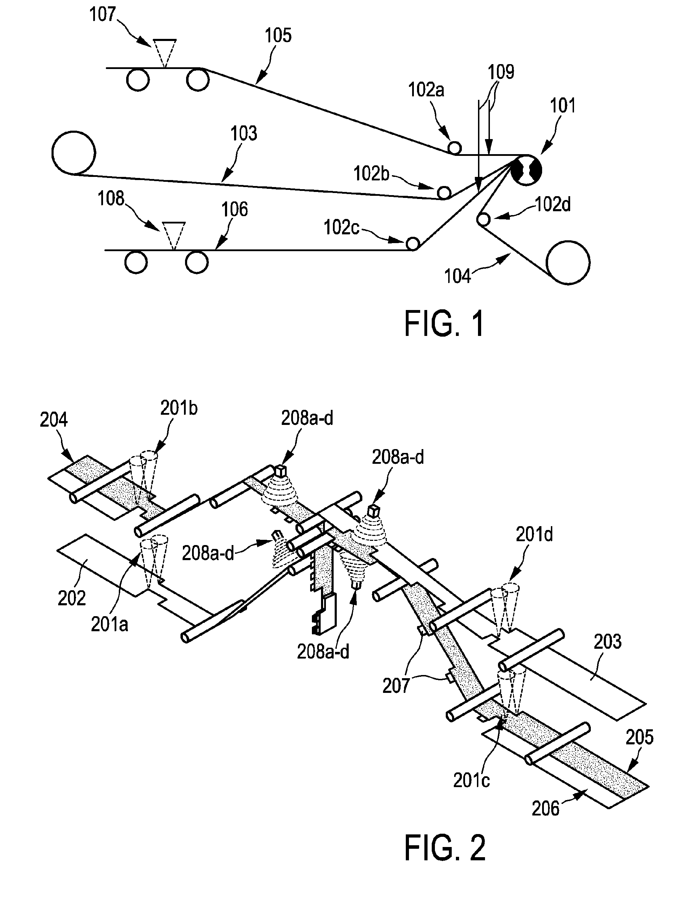

Eine schematische Darstellung des erfindungsgemäßen Verfahrens findet sich in **Fig. 1****.** Eine Wickelvorrichtung **101** wird über die Umlenkrollen **102a** bis **102d** mit zwei bandförmigen Separatoren **103** und **104** sowie einer bandförmigen Anode **105** und einer bandförmigen Kathode **106** gespeist. In dieser Vorrichtung **101** erfolgt die Herstellung eines Elektrodenwickels mit der Sequenz Separator / Kathode / Separator / Anode. Mit Hilfe der Laser **107** und **108** werden die Längsseiten der bandförmigen Elektroden **105** und **106** beschnitten. Dabei werden die oben erwähnten Ableiterfahnen gebildet. Deren Positionierung wird über Sensoren am Punkt **109** abgeglichen. Bei Bedarf werden die Schnittmuster für die noch zu bildenden Ableiterfahnen, insbesondere deren Abstände an den Längsseiten, nachkorrigiert.

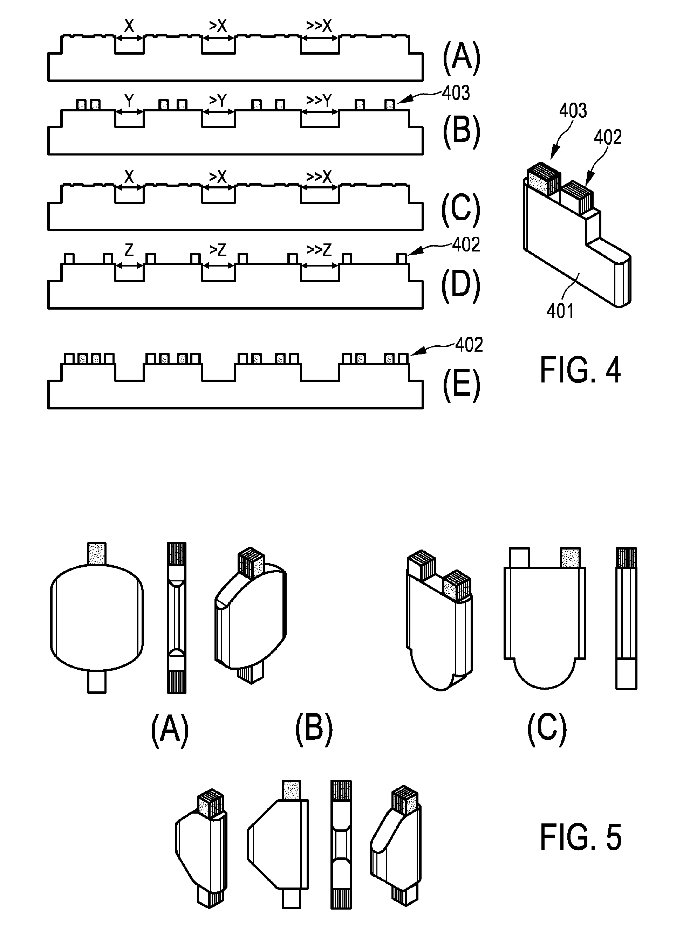

Eine erfindungsgemäße Vorrichtung mit insgesamt acht Lasern **201a** bis **201d** als Mittel zum Schneiden von Elektroden und Separatoren ist in **Fig. 2** dargestellt. In dieser Vorrichtung erfolgt die Herstellung eines Elektrodenwickels mit der Sequenz Separator 1 / Kathode / Separator 2 / Anode. Die beiden Separatoren **202** und **203** und die beiden Elektroden **204** und **205** werden jeweils in bandförmiger Form bereitgestellt. Die Längsseiten der Separatoren **202** und **203** und der Elektroden **204** und **205** werden über die Laser beschnitten. Dabei werden aus unbeschichteten Randbereichen **206** der Elektroden Ableiterfahnen **207** gebildet. Gleichzeitig werden in die Längsseiten der Elektroden **204** und **205** und der Separatoren **202** und **203** Konturen geschnitten, wie sie in Fig. 4 zu sehen sind. Aus Elektoden mit solchen Konturen lassen sich Elektrodenwickel erhalten, die einen Wickelgrundkörper mit einem sich in axialer Richtung ändernden Querschnitt aufweisen (asymmetrische Elektrodenwickel). Über die Sensoren **208a-d** erfolgt eine Schnittmusterkontrolle, bei der sowohl die Randkonturen der Elektroden **204** und **205** und Separatoren **202** und **203** als auch die relative Positionierung der Ableiterfahnen überprüft wird. Wenn bei der Überprüfung festgestellt wird, dass im resultierenden Wickel ein Versatz entsteht, werden die Schnittvorgaben für die Laser **201a** bis **201d** im laufenden Betrieb nachkorrigiert.

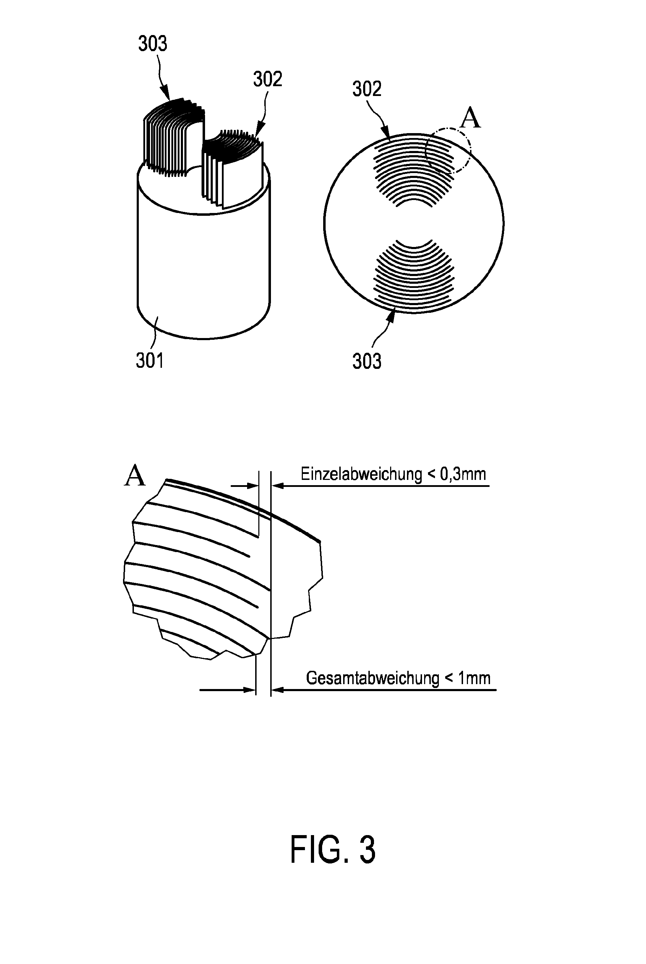

Ein Elektrodenwickel **300** aus spiralförmig gewickelten Elektroden und Separatoren, wie er beispielsweise mit dem in Fig. 1 dargestellten Verfahren erhalten werden kann, ist in **Fig. 3** links dargestellt. Links sieht man eine Gesamtdarstellung des Wickels **300** mit dem zylinderförmigen Wickelgrundkörper **301,** der aus einem spiralförmig gewickelten Verbund aus Elektroden und Separatoren gebildet ist. Weiterhin sind zwei Gruppen von Ableiterfahnen **302** und **303** zu erkennen, welche stirnseitig aus dem Wickel **300** ragen. Rechts ist eine Draufsicht auf den links dargestellten Wickel **300** bzw. auf die Stirnseite des Wickels **300** mit den Gruppen von Ableiterfahnen **302** und **303** dargestellt sowie eine ausschnittsweise Vergrößerung derselben. Gut zu erkennen ist, dass die einzelnen Ableiterfahnen in Richtung des Zentrums des Wickels **300** überlappend angeordnet sind. Sie bilden eine Art Stapel aus, innerhalb dem einzelne Ableiterfahnen mit benachbarten vollständig überlappen. In der ausschnittsweisen Vergrößerung ist dargestellt, dass die einzelnen Ableiterfahnen zueinander nur einen minimalen radialen Versatz aufweisen. Solch präzise Ergebnisse lassen sich mit Hilfe des erfindungsgemäßen Verfahrens problemlos erhalten.

In **Fig. 4** ist der Elektrodenwickel **400** mit dem Wickelgrundkörper **401** sowie mit den positiven Ableitern **402** und den negativen Ableitern **403** dargestellt. Wie bereits erwähnt, weist der Wickelgrundkörper **401** einen sich in axialer Richtung ändernden Querschnitt auf. Ein solcher Wickel ist aus den bandförmigen Separatoren **A** und **C** sowie den bandförmigen Elektroden **B** und **D** herstellbar. Dargestellt sind jeweils Fragmente von Bändern nach dem Konturschnitt, beispielsweise durch Laser einer Vorrichtung gemäß Fig. 2. Hervorgehoben sind die Abstände X, Y und Z, die in den Separatoren und Elektroden **A bis** D von links nach rechts zunehmen. Diese Zunahme ist erforderlich, um den steigenden Wickelradius auszugleichen, wenn die dargestellten bandförmigen Elektroden und Separatoren von links beginnend aufgewickelt werden. In E ist ein noch nicht gewickelter Verbund aus den Elektroden und Separatoren **A** bis **D** dargestellt.

In **Fig. 5** sind weitere Ausführungsformen von gemäß dem erfindungsgemäßen Verfahren herstellbaren asymmetrischen Elektrodenwickeln dargestellt. Die in **Fig. 5A** und **5B** dargestellten Wickel weisen an zwei gegenüberliegenden Stirnseiten Gruppen aus negativen und positiven Ableitern auf. In **Fig. 5C** ist dagegen ein Wickel dargestellt, bei dem die positiven und negativen Ableiterfahnen an der gleichen Stirnseite aus dem Elektrodenwickel herausragen.

## Patentansprüche

1. Verfahren zur Herstellung von Elektrodenwickeln, umfassend die Schritte
(A) Bereitstellen von mindestens einer streifen- oder bandförmige Anode,
(B) Ausbilden von flächigen negativen Ableiterfahnen in variierenden Abständen an mindestens einer Längsseite der mindestens einen Anode und/oder Schneiden einer Kontur in mindestens eine Längsseite der mindestens einen Anode,
(C) Bereitstellen von mindestens einer streifen- oder bandförmigen Kathode,
(D) Ausbilden von flächigen positiven Ableiterfahnen in variierenden Abständen an mindestens einer Längsseite der mindestens einen Kathode und/oder Schneiden einer Kontur in mindestens eine Längsseite der mindestens einen Kathode
(E) Bereitstellung mindestens eines streifen- oder bandförmigen Separators,
(F) Gegebenenfalls Schneiden einer Kontur in mindestens eine Längsseite des mindestens einen Separators und
(G) Aufwickeln der mindestens einen Anode, der mindestens einen Kathode und des mindestens einen Separators zu einem Wickel mit der Sequenz Anode / Separator / Kathode,
**dadurch gekennzeichnet, dass** der Schritt (G) mindestens mit einem der Schritte (B) oder (D) und gegebenenfalls (F) zeitlich überlappt und dass über mindestens einen Sensor mindestens einer der Parameter
- relative Positionierung der positiven Ableiterfahnen zueinander,
- relative Positionierung der negativen Ableiterfahnen zueinander,
- relative Positionierung der positiven Ableiterfahnen zu den negativen Ableiterfahnen,
- relative Positionierung der mindestens einen Kathode zur mindestens einen Anode,
- relative Positionierung des mindestens einen Separators zur mindestens einen Kathode und/oder zur mindestens einen Anode,
- Dicke und/oder Geometrie der mindestens einen Anode, insbesondere Dicken- und/oder geometrischer Verlauf der mindestens einen streifen- oder bandförmigen Anode in Längsrichtung,
- Dicke und/oder Geometrie der mindestens einen Kathode, insbesondere Dicken- und/oder geometrischer Verlauf der mindestens einen streifen- oder bandförmigen Kathode in Längsrichtung, und
- Dicke und/oder Geometrie des mindestens einen Separators, insbesondere Dicken- und/oder geometrischer Verlauf der mindestens einen streifen- oder bandförmigen Separators in Längsrichtung,
erfasst wird und in Abhängigkeit des Messergebnisses
- die Abstände zwischen den in Schritt (B) und/oder (D) noch auszubildenden Ableiterfahnen nachkorrigiert werden und/oder
- die zu schneidenden Konturen für die Längsseiten der Elektroden und/oder des mindestens einen Separators nachkorrigiert werden.

2. Verfahren nach Anspruch 1, **dadurch gekennzeichnet, dass** das Ausbilden der Ableiterfahnen einen Schneidvorgang, insbesondere mit Hilfe mindestens eines Lasers, umfasst.

3. Verfahren nach einem der Ansprüche 1 oder 2, **dadurch gekennzeichnet, dass** es sich bei der streifen- oder bandförmigen Anode und der streifen- oder bandförmigen Kathode um die Elektroden einer Batteriezelle oder eines Kondensators handelt.

4. Vorrichtung zur Durchführung eines Verfahrens nach einem der vorhergehenden Ansprüche, umfassend
- Mittel zum Bereitstellen von mindestens einer streifen- oder bandförmigen Anode,
- Mittel zum Ausbilden von flächigen negativen Ableiterfahnen in variierenden Abständen an mindestens einer Längsseite der mindestens einen Anode und/oder Mittel zum Schneiden einer Kontur in mindestens eine Längsseite der mindestens einen Anode,
- Mittel zum Bereitstellen von mindestens einer streifen- oder bandförmigen Kathode,
- Mittel zum Ausbilden von flächigen positiven Ableiterfahnen in variierenden Abständen an mindestens einer Längsseite der mindestens einen Kathode und/oder Mittel zum Schneiden einer Kontur in mindestens eine Längsseite der mindestens einen Kathode,
- Mittel zur Bereitstellung mindestens eines streifen- oder bandförmigen Separators,
- Gegebenenfalls Mittel zum Schneiden einer Kontur in mindestens eine Längsseite des mindestens einen Separators, und
- Mittel zum Aufwickeln der mindestens einen Anode, der mindestens einen Kathode und des mindestens einen Separators zu einem Wickel mit der Sequenz Anode / Separator / Kathode, **gekennzeichnet durch** mindestens einen Sensor zur Bestimmung mindestens eines der Parameter relative Positionierung der positiven Ableiterfahnen zueinander, relative Positionierung der negativen Ableiterfahnen zueinander, relative Positionierung der positiven Ableiterfahnen zu den negativen Ableiterfahnen, relative Positionierung der mindestens einen Kathode zur mindestens einen Anode, relative Positionierung des mindestens einen Separators zur mindestens einen Kathode und/oder zur mindestens einen Anode, Dicke und/oder Geometrie der mindestens einen Anode, insbesondere Dicken- und/oder geometrischer Verlauf der mindestens einen Anode in Längsrichtung, Dicke und/oder Geometrie der mindestens einen Kathode, insbesondere Dicken- und/oder geometrischer Verlauf der mindestens einen Kathode in Längsrichtung, und Dicke und/oder Geometrie des mindestens einen Separators, insbesondere Dicken- und/oder geometrischer Verlauf des mindestens einen Separators in Längsrichtung, und
- eine Datenverarbeitungs- und Steuereinrichtung, welche die Messergebnisse des mindestens einen Sensors erfasst und in Abhängigkeit derselben den Mitteln zum Ausbilden der flächigen Ableiterfahnen Abstände oder die Variation der Abstände zwischen den Ableiterfahnen an der mindestens einen Längsseite der mindestens einen Kathode und/oder der mindestens einen Anode vorgibt und/oder den Mitteln zum Schneiden der Kontur in die mindestens eine Längsseite der mindestens einen Kathode, der mindestens einen Anode und/oder des mindestens einen Separators eine korrigierte Konturvorgabe liefert.

## Claims

1. A method for producing electrode windings, comprising the steps of
(A) providing at least one strip- or ribbon-like anode,
(B) forming flat negative collector lugs at varying distances on at least one longitudinal side of the at least one anode and/or cutting a contour into at least one longitudinal side of the at least one anode,
(C) providing at least one strip- or ribbon-like cathode,
(D) forming flat positive collector lugs at varying distances on at least one longitudinal side of the at least one cathode and/or cutting a contour into at least one longitudinal side of the at least one cathode,
(E) providing at least one strip- or ribbon-like separator,
(F) optionally cutting a contour into at least one longitudinal side of the at least one separator, and
(G) winding up the at least one anode, the at least one cathode and the at least one separator to form a winding with the sequence anode/separator/cathode,
**characterized in that** step (G) and at least one of steps (B) or (D) and optionally (F) overlap with respect to time and **in that** using at least one sensor at least one of the parameters comprising
- relative positioning of the positive collector lugs in relation to one another,
- relative positioning of the negative collector lugs in relation to one another,
- relative positioning of the positive collector lugs in relation to the negative collector lugs,
- relative positioning of the at least one cathode in relation to the at least one anode,
- relative positioning of the at least one separator in relation to the at least one cathode and/or in relation to the at least one anode,
- thickness and/or geometry of the at least one anode, in particular thickness and/or geometric profile of the at least one strip- or ribbon-like anode in the longitudinal direction,
- thickness and/or geometry of the at least one cathode, in particular thickness and/or geometric profile of the at least one strip- or ribbon-like cathode in the longitudinal direction, and
- thickness and/or geometry of the at least one separator, in particular thickness and/or geometric profile of the at least one strip- or ribbon-like separator in the longitudinal direction,
is detected and, depending on the measurement result,
- the distances between the collector lugs, which are still to be formed in step (B) and/or (D), are re-corrected,
and/or
- the contours, which are to be cut, for the longitudinal sides of the electrodes and/or of the at least one separator are re-corrected.

2. The method according to claim 1, **characterized in that** the formation of the collector lugs comprises a cutting process, in particular with the aid of at least one laser.

3. The method according to any one of claims 1 or 2, **characterized in that** the strip- or ribbon-like anode and the strip- or ribbon-like cathode are the electrodes of a battery cell or of a capacitor.

4. A device for carrying out a method according to any one of the preceding claims, comprising
- means for providing at least one strip- or ribbon-like anode,
- means for forming flat negative collector lugs at varying distances on at least one longitudinal side of the at least one anode and/or means for cutting a contour into at least one longitudinal side of the at least one anode,
- means for providing at least one strip- or ribbon-like cathode,
- means for forming flat positive collector lugs at varying distances on at least one longitudinal side of the at least one cathode and/or means for cutting a contour into at least one longitudinal side of the at least one cathode,
- means for providing at least one strip- or ribbon-like separator,
- optionally means for cutting a contour into at least one longitudinal side of the at least one separator, and
- means for winding up the at least one anode, the at least one cathode and the at least one separator to form a winding with the sequence anode/separator/cathode, **characterized by**
- at least one sensor for determining at least one of the parameters: relative positioning of the positive collector lugs in relation to one another, relative positioning of the negative collector lugs in relation to one another, relative positioning of the positive collector lugs in relation to the negative collector lugs, relative positioning of the at least one cathode in relation to the at least one anode, relative positioning of the at least one separator in relation to the at least one cathode and/or in relation to the at least one anode, thickness and/or geometry of the at least one anode, in particular thickness and/or geometric profile of the at least one anode in the longitudinal direction, thickness and/or geometry of the at least one cathode, in particular thickness and/or geometric profile of the at least one cathode in the longitudinal direction, and thickness and/or geometry of the at least one separator, in particular thickness and/or geometric profile of the at least one separator in the longitudinal direction, and
- a data-processing and control device which detects the measurement results of the at least one sensor and, depending on said measurement results, prespecifies, to the means for forming the flat collector lugs, distances or the variation in the distances between the collector lugs on the at least one longitudinal side of the at least one cathode and/or of the at least one anode and/or supplies a corrected prespecified contour value to the means for cutting the contour into the at least one longitudinal side of the at least one cathode, of the at least one anode and/or of the at least one separator.

## Revendications

1. Procédé de fabrication d'enroulements d'électrode, comprenant les étapes de :
(A) mise à disposition d'au moins une anode en forme de bandeau ou de bande ;
(B) façonnage de fanions dérivateurs négatifs plats à distances variables au niveau de l'au moins un côté longitudinal de l'au moins une anode et/ou découpe d'un contour dans au moins un côté longitudinal de l'au moins une anode ;
(C) mise à disposition d'au moins une cathode en forme de bandeau ou de bande ;
(D) façonnage de fanions dérivateurs positifs plats à distances variables au niveau de l'au moins un côté longitudinal de l'au moins une cathode et/ou découpe d'un contour dans au moins un côté longitudinal de l'au moins une cathode ;
(E) mise à disposition d'au moins un séparateur en forme de bandeau ou de bande ;
(F) le cas échéant découpe d'un contour dans au moins un côté longitudinal de l'au moins un séparateur ; et
(G) enroulement de l'au moins une anode, de l'au moins une cathode et de l' au moins un séparateur pour former un enroulement avec la séquence anode / séparateur / cathode ;
**caractérisé en ce que** l'étape (G) chevauche au moins en partie une des étapes (B) ou (D) et le cas échéant (F) et que l'on détecte via au moins un capteur au moins un des paramètres suivants :
- positionnement relatif des fanions dérivateurs positifs les uns par rapport aux autres, positionnement relatif des fanions dérivateurs négatifs les uns par rapport aux autres ;
- positionnement relatif des fanions dérivateurs positifs par rapport aux fanions dérivateurs négatifs ;
- positionnement relatif de l'au moins une cathode par rapport à l'au moins une anode ;
- positionnement relatif de l'au moins un séparateur par rapport à l'au moins une cathode et/ou par rapport à l'au moins une anode ;
- épaisseur et/ou forme géométrique de l'au moins une anode, notamment tracé d'épaisseur et/ou de forme géométrique de l'au moins une anode en forme de bandeau ou de bande dans la direction longitudinale ;
- épaisseur et/ou forme géométrique de l'au moins une cathode, notamment tracé d'épaisseur et/ou de forme géométrique de l'au moins une cathode en forme de bandeau ou de bande dans la direction longitudinale ;
et
- épaisseur et/ou forme géométrique de l'au moins un séparateur, notamment tracé d'épaisseur et/ou de forme géométrique de l'au moins un séparateur en forme de bandeau ou de bande dans la direction longitudinale ;
et en fonction du résultat de mesure :
- refaçonnage des écartements entre les fanions dérivateurs à l'étape (B) et/ou (D) ; et/ou
- post-correction des contours à couper pour les côtés longitudinaux des électrodes et/ou de l'au moins un séparateur.

2. Procédé selon la revendication 1, **caractérisé en ce que** le façonnage des fanions dérivateurs comprend un processus de coupe, notamment à l'aide d'au moins un laser.

3. Procédé selon l'une quelconque des revendications 1 ou 2, **caractérisé en ce que** l'anode en forme de bandeau ou de bande et la cathode en forme de bandeau ou de bande sont les électrodes d'une cellule de batterie d'un condensateur.

4. Dispositif de réalisation d'un procédé selon l'une quelconque des revendications précédentes, comprenant :
- des moyens de mise à disposition d'au moins une anode en forme de bandeau ou de bande ;
- des moyens de façonnage de fanions dérivateurs négatifs plats à distances variables au niveau de l'au moins un côté longitudinal de l'au moins une anode et/ou des moyens de découpe d'un contour dans au moins un côté longitudinal de l'au moins une anode ;
- des moyens de mise à disposition d'au moins une cathode en forme de bandeau ou de bande ;
- des moyens de façonnage de fanions dérivateurs positifs plats à distances variables au niveau de l'au moins un côté longitudinal de l'au moins une cathode et/ou des moyens de découpé d'un contour dans au moins un côté longitudinal de l'au moins une cathode ;
- des moyens de mise à disposition d'au moins un séparateur en forme de bandeau ou de bande ;
- le cas échéant des moyens de découpe d'un contour dans au moins un côté longitudinal de l'au moins un séparateur et
- des moyens d'enroulement de l'au moins une anode, de l'au moins une cathode et de l'au moins un séparateur pour former un enroulement avec la séquence anode / séparateur / cathode ;
**caractérisé par**
- au moins un capteur pour déterminer au moins un des paramètres relatifs au positionnement relatif des fanions dérivateurs positifs les uns par rapport aux autres, au positionnement relatif des fanions dérivateurs négatifs les uns par rapport aux autres, au positionnement relatif des fanions dérivateurs positifs par rapport aux fanions dérivateurs négatifs, au positionnement relatif de l'au moins une cathode par rapport à l'au moins une anode, au positionnement relatif de l'au moins un séparateur par rapport à l'au moins une cathode et/ou par rapport à l'au moins une anode, à l'épaisseur et/ou la forme géométrique de l'au moins une anode, notamment au tracé d'épaisseur et/ou de forme géométrique de l'au moins une anode dans la direction longitudinale, à l'épaisseur et/ou la forme géométrique de l'au moins une cathode, notamment au tracé d'épaisseur et/ou de forme géométrique de l'au moins une cathode dans la direction longitudinale et à l'épaisseur et/ou la forme géométrique de l'au moins un séparateur, notamment le tracé d'épaisseur et/ou de forme géométrique de l'au moins un séparateur dans la direction longitudinale ; et
- un dispositif de commande et de traitement de données détectant les résultats de mesure de l'au moins un capteur et envoyant comme directive aux moyens de façonnage des fanions dérivateurs plats les écartements ou la variation des écartements entre les fanions dérivateurs au niveau de l'au moins un côté longitudinal de l'au moins une cathode et/ou de l'au moins une anode, en fonction desdits résultats, et/ou fournissant une directive de contour corrigée aux moyens de coupe du contour dans l'au moins un côté longitudinal de l'au moins une cathode, de l'au moins une anode et/ou de l'au moins un séparateur.
